# EUROPEAN PATENT APPLICATION

(11) **EP 2 233 363 A1**
(43) Date of publication of application: **29.09.2010**
(21) Application number: 08850722.3
(22) Date of filing: 11.11.2008
(51) Int. Cl.: B60R 11/02

(54) **APPARATUS WITH STOWABLE DISPLAY SECTION, AND INFORMATION APPARATUS FOR MOUNTING ON VEHICLE**

(30) Priority: 12.11.2007 JP 2007293263
(71) Applicant: Clarion Co., Ltd., Bunkyo-ku Tokyo 112-8608 (JP)
(72) Inventor: YOSHIKAWA, Hiroki, Tokyo 112-8608 (JP)
(74) Representative: Glawe, Delfs, Moll
(86) International application number: PCT/JP2008/003249
(87) International publication number: WO 2009/063607

(57) **Abstract**

There are provided screen unit stowable type equipment and in-vehicle mount information equipment that have a communication antenna mounted at an image display unit side, and can keep reception sensitivity even under a state that the image display unit is stowed in an equipment main body portion.

In screen unit stowable type equipment having an equipment main body portion 10 having an operation panel 30 secured to the front surface thereof and an image display unit 20 that is stowed in the equipment main body portion 10 so as to be pulled out from the front surface of the equipment main body portion 10 with a liquid crystal display screen 21 being placed face down, a radio communication unit which can communicate with an external is provided, and a pattern antenna 110 for radio communication is provided to the tip portion 20a in a pull-out direction of the image display unit 20.

## Description

### Technical Field

The present invention relates to screen unit stowable type equipment and in-vehicle mount information equipment which have an image display unit stowable in an equipment main body and a communication antenna mounted therein.

### Background Art

There are known mobile objects such as vehicles, etc. in which information communication equipment such as DVD, a car navigation system or the like is mounted. These equipment has an equipment main body portion having an operation panel secured to the front surface thereof, and an image display unit which is stowed in the equipment main body portion and has a screen constructed by a liquid crystal panel or the like. The image display unit is stowed in the equipment main body with the screen thereof being placed face down. When the image display unit is used, the image display unit is pulled out to the front side, and the image display unit is erected (raised) upwardly, whereby a user is enabled to see the screen. (For example, see Patent Document 1).
There have been recently used information communication equipment, etc. which enable handsfree call based on wireless connection (for example, Bluetooth (registered trademark)) between a car navigation system and a cellular phone. A communication antenna for receiving radio signals is mounted in such information communication equipment as described above.
Patent Document 1: JP-A-6-247218

### Disclosure of the Invention

### Problem to be solved by the Invention

It is necessary that the communication antenna described above can perform reception even when the image display unit described above is mounted in the equipment main body (when the screen is not used). In order to enhance the reception sensitivity, it is preferable to place the communication antenna so that the communication antenna faces the vehicle interior. Therefore, it may be considered that the communication antenna is provided to an operation panel face of the equipment main body. In this case, the arrangement of operation buttons, etc. is limited, the degree of freedom of design is restricted and the surface area of the operation panel must be set to be large, so that it is not realistic because space-saving has been promoted at present.

The present invention has been implemented in view of the foregoing situation, and has an object to provide screen unit stowable type equipment and in-vehicle mount information equipment that can keep reception sensitivity even under a state that a communication antenna is mounted at an image display unit side and the image display unit is stowed in the equipment main body.

### Means of solving the Problem

According to the present invention, screen unit stowable type equipment having an equipment main body portion having an operation panel secured to the front side thereof, and an image display unit that is stowed so as to be pulled out from the front side of the equipment main body with a screen thereof being placed face down is characterized by comprising a radio communication unit that can communicate with an external, wherein a communication antenna for the radio communication unit is provided at a tip portion in a pull-out direction of the image display unit.
Furthermore, in the screen unit stowable type equipment, a back plate of sheet metal may be provided to the image display unit so as to cover the upper side of the communication antenna with the backside of the image display unit placed face up, and a cut-out that may be larger than a set projection area of the communication antenna is formed in the back plate.

In the screen unit stowable type equipment, the communication antenna may be a pattern antenna provided to a liquid crystal panel board of the image screen unit.
Furthermore, in the screen unit stowable type equipment, the operation panel may be formed of non-metal material.
Still furthermore, in the screen unit stowable type equipment, the radio communication unit may communicate in conformity with a Bluetooth standard.

In-vehicle mount information equipment having an equipment main body portion having an operation panel secured to the front surface thereof, and an image display unit that is stowed in the equipment main body portion so as to be pulled out from the front side of the equipment main body portion with a screen thereof placed face down is characterized by comprising a radio communication portion that can communicate with an external, wherein a communication antenna for the radio communication unit is provided at a tip portion in a pull-out direction of the image display unit.

Furthermore, in the in-vehicle mount information equipment, a back plate of sheet metal may be provided to the image display unit so as to cover the upper side of the communication antenna with the backside of the image display unit placed face up, and a cut-out that may be larger than a set projection area of the communication antenna is formed in the back plate.
Still furthermore, in the screen unit stowable type equipment, the communication antenna may be a pattern antenna provided to a liquid crystal panel board of the image screen unit.

### Effect of the Invention

According to the present invention, the radio communication unit which can communicate with an external is provided, and also the communication antenna for the radio communicating unit is provided at the tip portion in the pull-out direction of the image display unit is provided. Therefore, even in any state that the image display unit is pulled out or stowed, the communication antenna for radio can be secured so as to face the interior of the vehicle, and the reception sensitivity of the antenna can be kept.

### Brief Description of the Drawings

[Fig. 1] is a perspective view showing in-vehicle mount information equipment according to an embodiment of the present invention.
[Fig. 2] is a perspective view showing a state that an image display unit is pulled out from the state of Fig. 1 to the front side and erected.
[Fig. 3] is a front view of the in-vehicle mount information equipment.
[Fig. 4] is a cross-sectional view of A-A of Fig. 3, and is a cross-sectional view showing a front side portion of the in-vehicle mount information equipment.
[Fig. 5] is an enlarged cross-sectional view of a tip portion 20a of an image display unit shown in Fig. 4.
[Fig. 6] is an enlarged cross-sectional view of an operation panel 30 shown in Fig. 4.

### Description of Reference Numerals

- 1: in-vehicle mount information equipment (screen unit stowable type equipment)
- 10: equipment main body
- 11: radio communication unit
- 20: image display u
- 20a: tip portion
- 21: liquid crystal display screen
- 22: backside plate
- 22a: tip portion
- 23: front panel
- 24: side panel
- 25: protection panel
- 26: liquid crystal panel
- 27: board for liquid crystal panel
- 27a: tip portion
- 28: liquid crystal holding sheet plate
- 30: operation panel
- 31: operation button
- 31a: operator
- 31b: arm portion
- 32: disc insertion port
- 33: pull-out button
- 34: front housing portion
- 34a: hole portion for operation
- 35: optical waveguide
- 36: back housing portion
- 36b: contact hole portion
- 40: face panel
- 100: cut-out
- 110: pattern antenna (communication antenna)
- 120: contact terminal
- A: arrow
- P: instrument panel
- Q: securing opening portion

### Best Mode for carrying out the Invention

Screen unit stowable type equipment according to an embodiment of the present invention will be described with reference to the drawings. In this embodiment, in-vehicle mount type equipment which is secured to an instrument panel of a vehicle (equipment having a function of a car navigation system, a DVD reproducing system, a ground digital TV or the like) will be described.

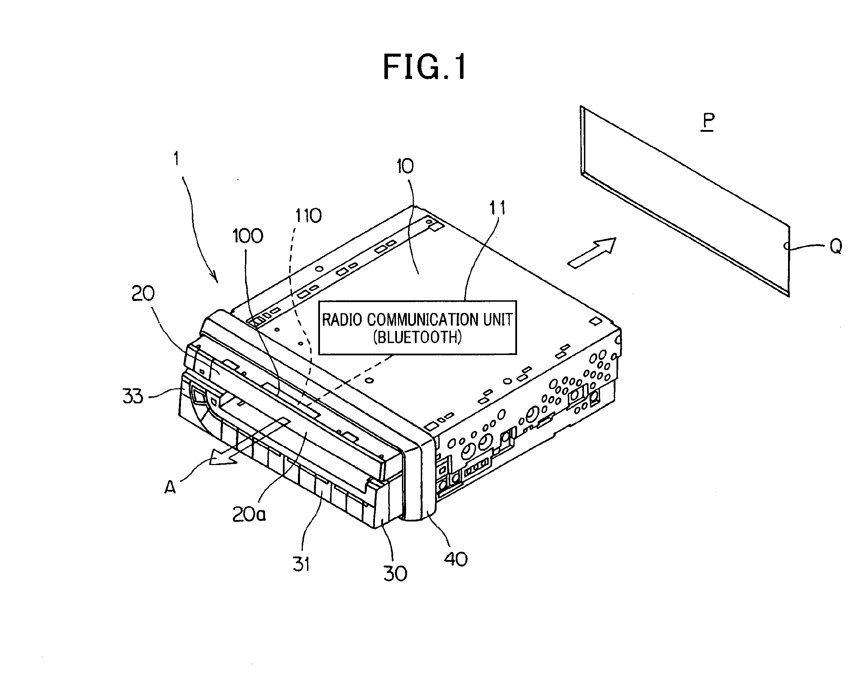

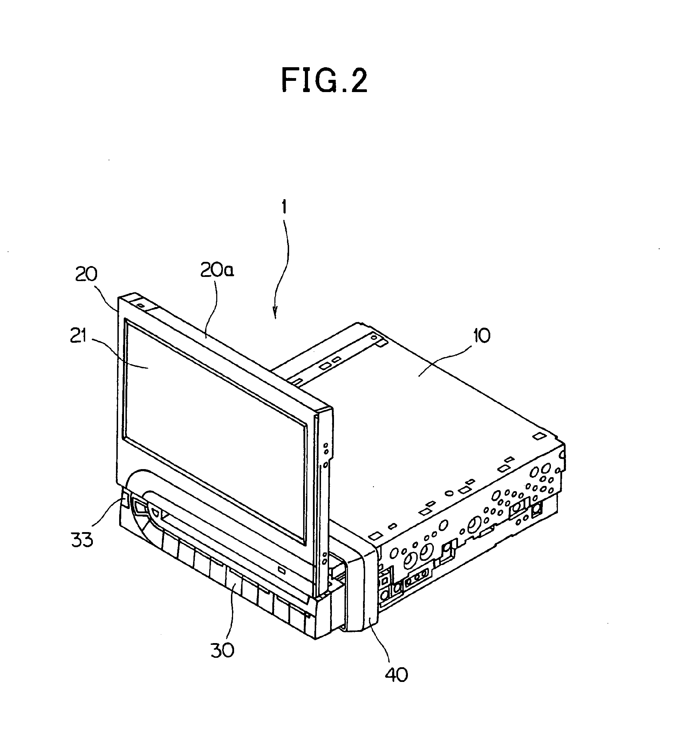

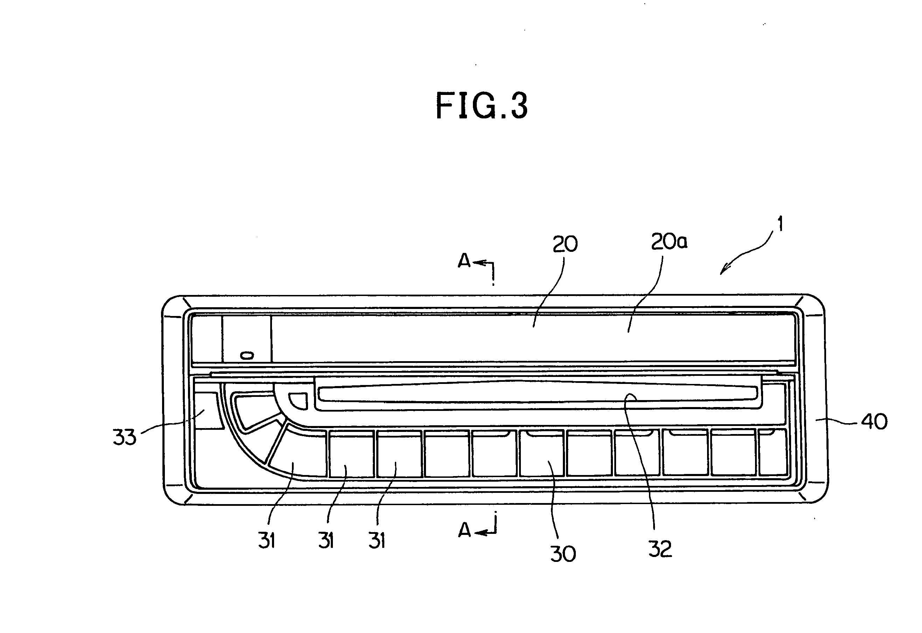

Fig. 1 is a perspective view showing the whole of the in-vehicle mount information equipment according to an embodiment of the present invention, and Fig. 2 is a perspective view showing a state that an image display unit is pulled out from the state of Fig. 1 to the front side and erected. Furthermore, Fig. 3 is a front view taken when the in-vehicle mount information equipment is viewed from the front surface (the front surface at the front side).

As shown in Figs. 1 and 2, the in-vehicle mount information equipment has an equipment main body portion 10 constituting the exterior of the equipment, an image display unit 20 which can be pulled out from the equipment main body portion 10, an operation panel 30 which is secured to the front surface of the equipment main body portion 10 and at the lower side of the image display unit 20, and a face panel 40 which covers the edge portion of an installation opening portion of an instrument panel P of a vehicle when the in-vehicle mount information equipment 1 is secured to the installation opening portion Q of the instrument panel P.

The equipment main body portion 10 is designed in a substantially rectangular parallelepiped shape and the exterior thereof is formed by sheet metal processing, that is, the equipment main body portion 10 is formed at a so-called 1DIN size (50mm in longitudinal direction X 178mm in lateral direction). That is, the equipment main body 10 is designed to have a size at which it can be secured to the installation opening portion Q even when the surface area of the instrument panel P is small. Therefore, as shown in Fig. 1, the equipment main portion 10 is inserted into the installation opening portion Q of the instrument panel P and fixed by a fixing clasp.
In the equipment main body portion 10 are mounted not only equipment for exercising the function of the car navigation system described above or the like, but also a radio communication unit 11 for performing radio communication by using a cellular phone and Bluetooth. The radio communication using Bluetooth can be performed between the in-vehicle mount information equipment 1 and the cellular phone by the radio communication unit 11, and also handsfree calling utilizing radio communications can be performed. The handsfree calling enables direct input of a telephone number of a cellular phone by a touch panel of a navigation screen or enables data exchange with a telephone book of a cellular phone.

As shown in Fig. 2, the image display unit 20 is designed in a substantially tubular shape having a predetermined thickness, and a liquid crystal display screen 21 is provided to one plane of the image display unit 20. This image display unit 20 is stowed in the equipment main body portion 10 with the liquid crystal display screen 21 being placed face down under a state that the in-vehicle mount information equipment 1 is not used (the state shown in Fig. 1). On the other hand, when the in-vehicle mount information equipment is used, the image display unit 20 is pulled out from the front side (in a direction of an arrow A in Fig. 1) with the liquid crystal display screen 21 being kept face down, and then turned upwardly around a hinge portion thereof (not shown), so that the liquid crystal display screen 21 is put into such a state that it faces a user side (as shown in Fig. 2, the image display unit 20 is kept to be erected). When the image display unit 20 is stowed, it is stowed through the reverse action.
Furthermore, as shown in Fig. 1, the tip portion 20a of the image display unit 20 in the pull-out direction is located at the front side of the equipment main body portion 10 under the state that the image display unit 20 is stowed. A communication antenna described later in detail is disposed at the tip portion 20a.

As shown in Fig. 3, the operation panel 30 is designed in consideration of design performance, and plural operation buttons 31 for operating various kinds of functions of the in-vehicle mount information equipment, a disc insertion port 32 through which CD, DVD or the like can be inserted and taken out, etc. are arranged on an operation face as the surface of the operation panel 30.
Furthermore, a pull-out button 33 for pulling out the image display unit 20 is disposed at the left side of the operation panel 30. When a user pushes the pull-out button 33, a driving mechanism (not shown) provided in the equipment main body portion 10 is actuated, and a series of pull-out operations described above for the image display unit 20 is automatically performed.

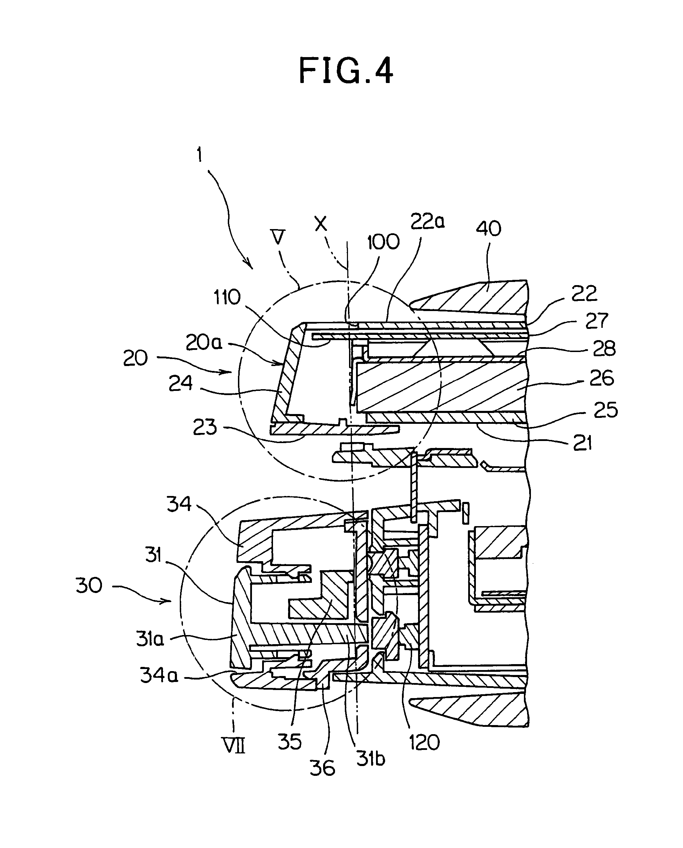

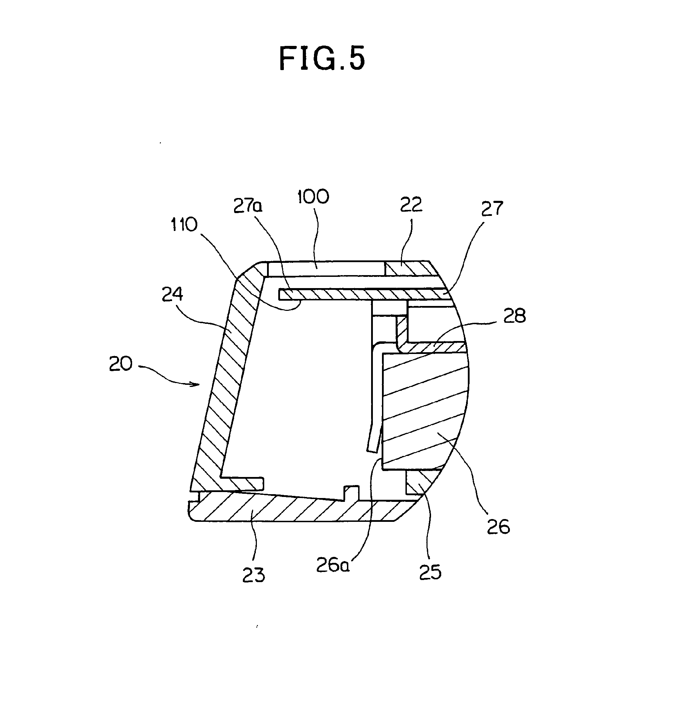

Fig. 4 is a cross-sectional view of A-A and also a cross-sectional view showing the front side portion of the in-vehicle mount information equipment 1. Fig. 5 is an enlarged cross-sectional view of the tip portion 20a of the image display unit 20 shown in Fig. 4. The orientations and directions concerning the right and left sides, the front and rear sides, the back side, etc. of the image display unit 20 are assumed to be based on the front view of the liquid crystal display screen 21 of the image display unit 20.

As shown in Fig. 4, the exterior portion of the image display unit 20 comprises a back plate 22, a front panel 23 and a side panel 24, and these panels are assembled to support the liquid crystal display screen 21 located at the front side of the image display unit 20.

The back plate 22 is formed by processing a steel plate to secure the structural strength of the image display unit 20, and it is provided over the whole area of the back side of the image display unit 20. As shown in Figs. 1, 4 and 5, a cut-out 100 is formed at the tip portion 22a of the back plate 22. The details of the cut-out 100 will be described later.

The front panel 23 is formed of non-metal material such as resin or the like, and it is secured to cover the outer edge portion of the liquid crystal display screen 21. Furthermore, the side panel 24 is also formed of non-metal material such as resin or the like, and it covers the front edge and side surface of the image display portion 20.
That is, non-metal material such as resin or the like is used for all parts other than the back plate 22 using the steel plate at the tip portion 20a of the image display unit 20.

On the other hand, as shown in Fig. 4, at the inside of the image display unit 20 are provided a protection panel 25 and a liquid crystal panel 26 constituting the liquid crystal display screen 21, and a liquid crystal panel board 27 which is located at the back side of the liquid crystal panel 26 and controls color, etc. displayed on the liquid crystal panel 26. The liquid crystal panel 26 is protected by the protection panel 25 over the overall front surface thereof, and the rear surface of the liquid crystal panel 26 is secured to the liquid crystal panel board 27 through a liquid crystal holding sheet metal 28.

The liquid crystal panel board 27 is provided with a board pattern (not shown) on a surface thereof which faces the liquid crystal panel 26. Furthermore, a tip portion 27a of the liquid crystal panel board 27 which is located at the tip portion 20a of the image display unit 20 is designed to protrude ahead of the tip portion 26a of the liquid crystal panel 26 as shown in Fig. 5, and a communication pattern antenna 110 (communication antenna) is provided at the tip portion 27a of the liquid crystal panel board. Here, the pattern antenna of this embodiment means an antenna which is provided as a part of a board pattern constituting a liquid crystal circuit or another circuit formed on the liquid crystal panel board 27.

The board pattern of the pattern antenna 110 is connected to another board pattern provided on the liquid crystal panel board 27. This board pattern is electrically connected to information communication equipment (not shown) in the equipment main body portion 10 by a connector device (not shown), whereby a signal transmitted/received by the pattern antenna 110 reaches the information communication equipment (not shown) in the equipment main body 10. Furthermore, in the case of a bidirectional communication such as Bluetooth or the like, a signal is transmitted from the information communication equipment to the pattern antenna 110.

The liquid crystal panel board 27 is disposed so as to face the back plate 22 located at the upper side thereof as shown in Fig. 5 under the state that the image display unit 20 is stowed in the equipment main body portion 10. The cut-out 100 formed at the tip portion 22a of the back plate 22 described above is formed to be larger than the mount projection area of the pattern antenna 110. That is, the dimension of the cut-out 100 is larger than the dimension of the pattern antenna 110 with respect to all the directions of the right-and-left direction and the depth direction on the paper surface of Fig. 5, and the whole upper side of the pattern antenna 110 is not covered by the metal back plate 22.

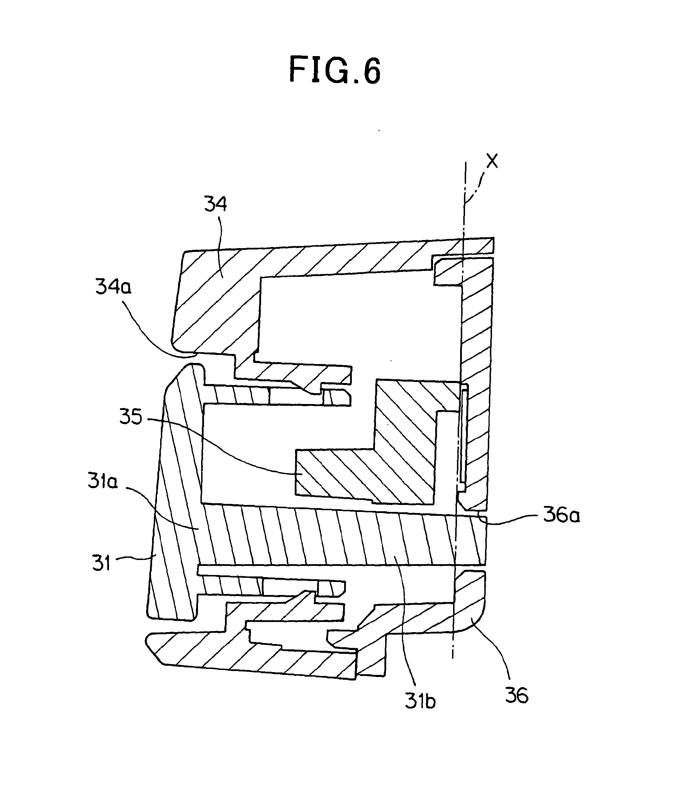

Fig. 6 is an enlarged cross-sectional view of the operation panel 30 shown in Fig. 4. The operating button 31 and the pull-out button 33 have the same construction. Therefore, in the following description, the operating buttons 31 will be described, and the description on the pull-out button 33 is omitted.
The operation panel 30 comprises the operating buttons 31, a front housing portion 34 formed substantially on the same plane as the operating buttons 31, an optical waveguide 35 and a rear housing portion 36, and all of these parts are formed of non-metal material such as resin or het like. That is, the front housing portion 34 and the rear housing portion 36 are provided so as to exclude the metal parts from the portion located at the lower side of the pattern antenna 110. As shown in Fig. 4, contact terminals 120 of metal whose contact points are set to ON/OFF by operating the operating buttons 31, etc. are located to be nearer to the equipment main body portion 10 side than the projection portion of the pattern antenna 110 when viewed from the upper side (the projection line of the end portion at the equipment main body portion 10 side of the pattern antenna 110 is represented by a virtual line X in Figs. 4 and 6).

As shown in Fig. 6, the operating button 31 comprises an operating portion 31a which is pushed by a user for an operation, and an arm portion 31b which extends from the operating portion 31a to the equipment main body portion 10 side, and the operating portion 31a and the arm portion 31b are formed integrally with each other so as to be substantially T-shaped in cross-section. The operating unit 31a of the operating button 31 is exposed from an operating hole portion 34a formed on the front surface of the front housing portion 34, and the front surface of the operating portion 31a and the front surface of the front housing portion 34 are disposed substantially on the same plane. Movement of the operating button 31 in the push direction is guided by a guide portion (not shown) provided to the front housing portion 34. Furthermore, a contact hole portion 36b is formed in the rear housing portion 36 so that the arm portion 31b can come into contact with the contact terminal 120 through the contact hole portion 36b.

According to the in-vehicle mount information equipment of this embodiment, there are provided the equipment main body portion 10 having the operation panel 30 secured to the front surface thereof, and the image display unit 20 which is stowed in the equipment main body portion 10 so that the image display unit 20 can be pulled out from the front side of the equipment main body portion 10 with the screen thereof being placed face down and then the screen is erected and used after the pull-out. In addition, the information communication equipment which can communicate with the outside is provided, and the pattern antenna 110 for the information communication equipment is provided at the tip portion 20a in the pull-out direction of the image display unit 20 and also at the tip portion 27a of the liquid crystal panel board 27. Therefore, even under the state that the image display unit 20 is pulled out or stowed, the pattern antenna 110 is disposed so as to face the car interior. Therefore, even when the image display unit 20 is stowed (when the in-vehicle mount information equipment 1 is not used), the reception sensitivity of the in-vehicle mount information equipment 1 can be kept, and thus the communication quality of the short-range communication can be kept excellent.
Furthermore, the antenna is not provided to the operating face of the operation panel 30, and thus the design performance of the operation panel 30 is not lost.

Furthermore, the pattern antenna 110 is provided on the liquid crystal panel board 27, and thus it is unnecessary to further provide an antenna and a part for mounting the antenna. Therefore, the number of these parts can be reduced, and the part cost and the assembling cost can be reduced.
Still furthermore, the communication antenna is constructed by the pattern antenna 110, and thus a space in which the antenna is provided is not required. Therefore, the space can be effectively used, and thus the degree of freedom of design can be enhanced. Furthermore, by eliminating this space, the image display unit 20 can be miniaturized, and thus the whole size of the equipment can be reduced.

The image display unit 20 is provided with the back plate 22 formed of the sheet metal which cover the upper side of the pattern antenna 110 under the state that the back surface side of the image display unit 20 is oriented to the upper side, and a cut-out 100 which is larger than the set protection area of the pattern antenna is formed in the back plate 22. Therefore, any metal part can be prevented from existing above he pattern antenna 110 while the structural strength of the image display unit 20 can be secured by the back plate 22. Accordingly, electric waves of radio communication input/output from the back plate 22 side of the pattern antenna 110 can be prevented from being intercepted by the back plate 22 as a metal member to affect communications. Consequently, the communication quality can be excellently kept.

Furthermore, the operating buttons 31 of the operation panel 30 and the pull-out button 33 are formed of non-metal material, and the metal contact terminals 120, etc. located at the lower side of the pattern antenna 110 are disposed to be nearer to the equipment main body portion 10 side than the projection portion of the pattern antenna 110 when viewed from the upper side (the projection line of the end portion of the equipment main body portion 10 side of the pattern antenna 110 is represented by the virtual line X in Figs. 4 and 6), and thus metal parts can be prevented from existing below the pattern antenna 110. Accordingly, electric waves of radio communication input/output from the operation panel 30 side of the pattern antenna 110 can be prevented from being intercepted by the contact terminals 120 as metal members, etc. to affect communications. Consequently, the communication quality can be excellently kept.

The best mode for carrying out the invention has been described above, however, the present invention is not limited to the above-described embodiment. Various kinds of modifications and alterations can be made on the basis of the technical idea of the present invention.
For example, in this embodiment, the equipment which performs handsfree calling by using Bluetooth is described as an example of the equipment having the radio communicating unit 11. However, equipment for bidirectionally transmitting/receiving data by using electronic information equipment such as a notebook-size personal computer or the like and Bluetooth may be used. Furthermore, equipment for transmitting/receiving data by using a communication technique other than Bluetooth may be used. That is, these other communication techniques may be applied to the present invention insofar as the pattern antenna 110 can be constructed at the tip portion 20a of the image display unit 20.

In this embodiment, when the structural strength of the image display unit 20 can be secured by a part other than the back plate 22, this embodiment can be constructed without providing the cut-out in the back plate 22. Even in such a construction, the same reception sensitivity as the case where the image display unit 20 is pulled out from the equipment main body portion 10 can be kept even when the pattern antenna 110 is mounted at the image display unit 20 side and the image display unit 20 is stowed in the equipment main body portion 10.

## Claims

1. Screen unit stowable type equipment having an equipment main body portion having an operation panel secured to the front surface thereof, and an image display unit that is stowed in the equipment main body portion so as to be pulled out from the front side of the equipment main body portion with a screen thereof placed face down, **characterized by** comprising a radio communication portion that can communicate with an external, wherein a communication antenna for the radio communication unit is provided at a tip portion in a pull-out direction of the image display unit.

2. The screen unit stowable type equipment according to claim 1, wherein a back plate of sheet metal is provided to the image display unit so as to cover the upper side of the communication antenna with the backside of the image display unit placed face up, and a cut-out that is larger than a set projection area of the communication antenna is formed in the back plate.

3. The screen unit stowable type equipment according to claim 1, wherein the communication antenna is a pattern antenna provided to a liquid crystal panel board of the image screen unit.

4. The screen unit stowable type equipment according to claim 1, wherein the operation panel is formed of non-metal material.

5. The screen unit stowable type equipment according to claim 1, wherein the radio communication unit communicates in conformity with a Bluetooth standard.

6. In-vehicle mount information equipment having an equipment main body portion having an operation panel secured to the front surface thereof, and an image display unit that is stowed in the equipment main body portion so as to be pulled out from the front side of the equipment main body portion with a screen thereof placed face down, **characterized by** comprising a radio communication portion that can communicate with an external, wherein a communication antenna for the radio communication unit is provided at a tip portion in a pull-out direction of the image display unit.

7. The in-vehicle mount information equipment according to claim 6, wherein a back plate of sheet metal is provided to the image display unit so as to cover the upper side of the communication antenna with the backside of the image display unit placed face up, and a cut-out that is larger than a set projection area of the communication antenna is formed in the back plate.

8. The screen unit stowable type equipment according to claim 6, wherein the communication antenna is a pattern antenna provided to a liquid crystal panel board of the image screen unit.

## Amended claims

### Amended claims under Art. 19.1 PCT

1. Screen unit stowable type equipment having an equipment main body portion having an operation panel secured to the front surface thereof, and an image display unit that is stowed in the equipment main body portion so as to be pulled out from the front side of the equipment main body portion with a screen thereof placed face down, **characterized by** comprising a radio communication portion that can communicate with an external, wherein a communication antenna for the radio communication unit is provided at a tip portion in a pull-out direction of the image display unit.

2. The screen unit stowable type equipment according to claim 1, wherein a back plate of sheet metal is provided to the image display unit so as to cover the upper side of the communication antenna with the backside of the image display unit placed face up, and a cut-out that is larger than a set projection area of the communication antenna is formed in the back plate.

3. The screen unit stowable type equipment according to claim 1, wherein the communication antenna is a pattern antenna provided to a liquid crystal panel board of the image screen unit.

4. The screen unit stowable type equipment according to claim 1, wherein the operation panel is formed of non-metal material.

5. (amended). The screen unit stowable type equipment according to claim 4, wherein the operation panel is provided with an operation button that is formed of non-metal material and operated
by pushing, and the equipment main body portion is provided with a terminal that is actuated in accordance with the pushing operation on the operation button.

6. (amended). The screen unit stowable mount equipment according to claim 5, wherein the operation button is provided with an arm portion whose tip penetrates through a back surface of the operation panel and protrudes to the equipment main body side when the operation button is pushed, and the equipment main body portion is provided with a contact terminal at a position at which the tip of the arm portion comes into contact with the contact terminal when the operation button is pushed.

7. (amended). The screen unit stowable mount type equipment according to claim 1, wherein the radio communication unit communicates in conformity with a Bluetooth standard.

8. (amended) . In-vehicle mount information equipment having an equipment main body portion having an operation panel secured to the front surface thereof, and an image display unit that is stowed in the equipment main body portion so as to be pulled out from the front side of the equipment main body portion with a screen thereof placed face down, **characterized by** comprising a radio communication portion that can communicate with an external, wherein a communication antenna for the radio communication unit is provided at a tip portion in a pull-out direction of the image display unit.

9. (added). The in-vehicle mount information equipment according to claim 8, wherein a back plate of sheet metal is provided to the image display unit so as to cover the upper side of the communication antenna with the backside of the image display unit placed face up, and a cut-out that is larger than a set projection area of the communication antenna is formed in the back plate.

10. (added). The screen unit stowable type equipment according to claim 6, wherein the communication antenna is a pattern antenna provided to a liquid crystal panel board of the image screen unit.
